# EUROPÄISCHE PATENTSCHRIFT

(11) **EP 2 791 423 B1**
(45) Veröffentlichungstag und Bekanntmachung des Hinweises auf die Patenterteilung: **18.11.2015**
(21) Anmeldenummer: 12809195.6
(22) Anmeldetag: 13.12.2012
(51) Int. Cl.: E01C 19/28, E02D 3/026

(54) **VORRICHTUNG ZUR ERFASSUNG DER BEWEGUNG EINER VERDICHTERWALZE EINES BODENVERDICHTERS**
DEVICE FOR DETECTING THE MOVEMENT OF A COMPACTOR ROLLER ON A SOIL COMPACTOR
DISPOSITIF PERMETTANT DE DÉTECTER LE MOUVEMENT DU ROULEAU D'UN COMPACTEUR DE SOL

(30) Priorität: 14.12.2011 DE 102011088567
(43) Veröffentlichungstag der Anmeldung: 22.10.2014
(73) Patentinhaber: Hamm AG, 95643 Tirschenreuth (DE)
(72) Erfinder: VILLWOCK, Sebastian, 95701 Pechbrunn (DE); VÖLKEL, Werner, 92660 Neustadt (DE)
(74) Vertreter: RLTG
(86) Internationale Anmeldenummer: PCT/EP2012/075415
(87) Internationale Veröffentlichungsnummer: WO 2013/087783

(56) Entgegenhaltungen:
- WO-A1-94/20684
- WO-A1-95/10664
- US-A1- 2006 096 354
- US-A1- 2010 215 434

## Beschreibung

Die vorliegende Erfindung betrifft eine Vorrichtung zur Erfassung der Bewegung einer um eine Drehachse drehbaren Verdichterwalze eines Bodenverdichters.

Bei den zum Verdichten von Bodenaufbaumaterial, wie z. B. Erdreich, Kies, Asphalt oder dergleichen, eingesetzten Bodenverdichtern ist zum Erzielen eines gewünschten Verdichtungsgrades zumindest einer Verdichterwalze ein Rüttelantrieb zugeordnet. Vermittels eines derartigen Rüttelantriebs kann beispielsweise eine Umfangsrüttelbeschleunigung der Verdichterwalze erzeugt werden, um eine Oszilattionsbewegung der Verdichterwalze, also eine Hin- und Herbewegung in Umfangsrichtung, zu generieren. Weiter ist es möglich, vermittels eines Rüttelantriebs eine Radialrüttelbeschleunigung der Verdichterwalze und damit einhergehend eine Vibrationsbewegung, also eine Bewegung in Radialrichtung bezüglich einer Drehachse der Verdichterwalze, hervorzurufen.

Um bei so aufgebauten Bodenverdichtem Kenntnis über den Bewegungszustand der Verdichterwalze zu erlangen, ist es beispielsweise aus der US 2010/215434 A1 bekannt, an Rahmenbauteilen im Bereich einer Verdichterwalze Sensoren, wie z. B. Beschleunigungssensoren oder Winkelsensoren, vorzusehen. Da diese Sensoren jedoch nicht mit der hinsichtlich ihres Bewegungszustands zu überwachenden Walze selbst, sondern einem ggf. die Walze drehbar tragenden Rahmen bewegungsverkoppelt sind, können die von derartigen Sensoren gelieferten Sensorsignale bzw. die darin enthaltenen Informationen nur bedingt genutzt werden, um den Bewegungszustand, insbesondere verschiedene Schwingungsmodi oder Bewegungsformen, wie z. B. Springen, Taumeln oder Gieren einer Verdichterwalze, exakt aufzulösen.

Es ist die Zielsetzung der vorliegenden Erfindung, eine Vorrichtung zur Erfassung der Bewegung einer Verdichterwalze eines Bodenverdichters vorzusehen, welche eine genaue Ermittlung des Bewegungszustandes einer Verdichterwalze ermöglicht.

Erfindungsgemäß wird diese Aufgabe gelöst durch eine Vorrichtung zur Erfassung der Bewegung einer um eine Drehachse drehbaren Verdichterwalze eines Bodenverdichters, umfassend an einer Innenseite eines Walzenmantels eine Mehrzahl von in Umfangsrichtung um die Drehachse mit Umfangsabstand zueinander angeordneten, mit dem Walzenmantel um die Drehachse bewegbaren Bewegungssensoren.

Wesentlich ist bei der vorliegenden Erfindung zunächst, dass die zur Erfassung des Bewegungszustands eingesetzten Sensoren zusammen mit dem Walzenmantel bewegbar sind. Da sie dabei an der Innenseite des Walzenmantels positioniert sind, sind sie gegen äußere Einflüsse geschützt. Gleichwohl erfahren die mit dem Walzenmantel sich um die Drehachse bewegenden Sensoren Kräfte bzw. Beschleunigungen, welche denjenigen des Walzenmantels selbst unmittelbar entsprechen und liefern somit Signale, die wesentlich enger mit dem Bewegungszustand der Verdichterwalze verknüpft sind, als dies bei den Bewegungszustand von Rahmenteilen erfassenden Sensoren der Fall sein kann.

Ferner kann der Bodenverdichter umfassen:
- eine Funk-Signalübertragungsanordnung zur Übertragung von auf Sensorsignalen der Bewegungssensoren beruhender Bewegungsinformation zu einer Auswerteeinheit, oder/und
- eine Energiewandleranordnung zur Gewinnung elektrischer Energie aus der Verdichterwalzenbewegung zur Versorgung der Bewegungssensoren und der Funk-Signalübertragungsanordnung.

Wenn weiterhin eine Funk-Signalübertragungsanordnung vorgesehen ist, um die auf den Sensorsignalen beruhende Information zu einer Auswerteeinheit zu übertragen, kann auf das Vorsehen von Drehdurchführungen und entsprechenden Kabelverbindungen verzichtet werden, wodurch die erfindungsgemäße Vorrichtung robuster und weniger fehleranfällig, gleichzeitig aber auch wesentlich leichter aufzubauen ist.

Wenn weiterhin eine Energiewandleranordnung vorgesehen ist, welche aus der Bewegung der Verdichterwalze selbst Energie gewinnt und damit die Sensoren einerseits und die Funk-Signalübertragungsanordnung andererseits speist, kann die erfindungsgemäße Vorrichtung bei der Erfassung des Bewegungszustands einer Verdichterwalze völlig autark arbeiten. Es ist auch nicht erforderlich, über irgendwelche Leitungsverbindungen die verschiedenen mit elektrischer Energie zu betreibenden Systembereiche, wie Bewegungssensoren und Funk-Signalübertragungsanordnung, von außen mit elektrischer Energie zu speisen.

Um bei der erfindungsgemäßen Vorrichtung unabhängig von der jeweils eingenommenen Drehpositionierung einer Verdichterwalze den Bewegungszustand dort, wo sie in Kontakt mit dem zu verdichtenden Material steht, ermitteln zu können, wird weiter vorgeschlagen, wenigstens eine Gruppe mit wenigstens drei, vorzugsweise wenigstens vier, mit Umfangsabstand zueinander angeordneten Bewegungssensoren vorgesehen ist.

Um dabei sicherzustellen, dass die von den Sensoren einer Gruppe gelieferten Signale einem bestimmten Längenbereich der Verdichterwalze zugeordnet werden können, wird weiter vorgeschlagen, dass die Bewegungssensoren einer Gruppe im Wesentlichen im gleichen axialen Bereich angeordnet sind.

Da hinsichtlich des Bewegungszustands vor allem die Endbereiche einer Verdichterwalze bzw. eines Walzenmantels derselben besonders kritisch sind, wird weiter vorgeschlagen, dass in wenigstens einem, vorzugsweise beiden axialen Endbereichen des Walzenmantels eine Gruppe von Bewegungssensoren angeordnet ist. Insbesondere dann, wenn in beiden axialen Endbereichen jeweils eine Gruppe von Bewegungssensoren angeordnet ist, kann durch Vergleich der von diesen Gruppen gelieferten Informationen auch auf den Bewegungszustand in einem mittleren Bereich der Walze geschlossen werden.

Die Bewegungssensoren einer Gruppe können vorzugsweise in zueinander gleichmäßigem Umfangsabstand angeordnet sein, so dass die unter Berücksichtigung der Signale aller oder mehrerer Sensoren einer Gruppe durchzuführende Singalauswertung möglichst einfach bzw. für alle Sensoren in gleichartiger Weise durchgeführt werden kann.

Wenigstens ein Teil der Bewegungssensoren kann als Beschleunigungssensoren ausgebildet sein, wobei zum möglichst exakten Auflösen des Bewegungszustands einer Verdichterwalze vorteilhafterweise Dreiachsen-Beschleunigungssensoren eingesetzt werden.

Die Funk-Signalübertragungsanordnung kann in Zuordnung zu jedem Bewegungssensor eine Signalübertragungseinheit umfassen. Somit wird eine Baueinheit bereitgestellt, die für sich autark arbeitend an beliebiger Positionierung angeordnet werden kann.

Um den Aufbau möglichst einfach zu gestalten, wird vorgeschlagen, dass die Funk-Signalübertragungsanordnung für wenigstens zwei Bewegungssensoren, vorzugsweise alle Bewegungssensoren einer Gruppe von Bewegungssensoren, am meisten bevorzugt alle Bewegungssensoren, eine gemeinsame Signalübertragungseinheit umfasst. Da erfindungsgemäß die Signalübertragung per Funk erfolgt, kann auch die Funk-Signalübertragungsanordnung mit dem Walzenmantel rotierend positioniert werden und somit problemlos durch Leitungsverbindungen mit mehreren Bewegungssensoren gekoppelt werden, ohne dass eine Drehdurchführung erforderlich wird.

Wenn weiterhin die Energiewandleranordnung in Zuordnung zu jedem Bewegungssensor oder/und zur Funk-Signalübertragungsanordnung bzw. jeder Signalübertragungseinheit derselben eine Energiewandlereinheit umfasst, wird das Bereitstellen von im Wesentlichen autark arbeitenden Einheiten unterstützt, die auch dann beispielsweise noch arbeiten können, wenn andere aufgrund eines Defekts nicht mehr genutzt werden können.

Aufgrund eines möglichst einfachen und kostengünstigen Aufbaus wird auch für die Energiewandleranordnung vorgeschlagen, dass diese in Zuordnung zu wenigstens zwei Bewegungssensoren oder/und wenigstens zwei Signalübertragungseinheiten der Funk-Signalübertragungsanordnung, vorzugsweise allen Bewegungssensoren einer Gruppe von Bewegungssensoren oder/und den diesen zugeordneten Signalübertragungseinheiten, am meisten bevorzugt allen Bewegungssensoren oder/und Signalübertragungseinheiten, eine gemeinsame Energiewandlereinheit umfasst.

Die Erfindung betrifft ferner einen Bodenverdichter mit wenigstens einer Verdichterwalze und in Zuordnung zu wenigstens einer Verdichterwalze einer erfindungsgemäß aufgebauten Vorrichtung zur Erfassung des Bewegungszustands der Verdichterwalze.

Dabei kann zum Verbessern des Verdichtungsresultats der wenigstens einen Verdichterwalze ein Rüttelantrieb zur Erzeugung einer Umfangsrüttelbeschleunigung und damit einer Oszillationsbewegung der Verdichterwalze oder/und zur Erzeugung einer Radialrüttelbeschleunigung und damit einer Vibrationsbewegung der Verdichterwalze zugeordnet sein. Es ist selbstverständlich, dass der Rüttelantrieb verschiedene Antriebseinheiten zur Erzeugung der verschiedenen Bewegungszustände aufweisen kann.

Die vorliegende Erfindung wird nachfolgend mit Bezug auf die beiliegenden Figuren detailliert beschrieben. Es zeigt:
- Fig. 1: in Seitenansicht einen zum Verdichten von Boden einsetzbaren Bodenverdichter;
- Fig. 2: in prinzipieller Darstellung den Aufbau einer Vorrichtung zur Erfassung des Bewegungszustands der Verdichterwalze des Bodenverdichters der Fig. 1;
- Fig. 3: in ihren Darstellungen a) und b) in prinzipieller Weise die Positionierung einer Energiewandleranordnung;
- Fig. 4: in Zuordnung zu einem prinzipiell dargestellten Walzenmantel die Positionierung einer Vielzahl von Dreiachsen-Beschleunigungssensoren;
- Fig. 5: eine prinzipielle Seitenansicht eines Walzenmantels zum Erläutern des Einflusses der Gravitationsbeschleunigung auf die Bewegungszustandserfassung.

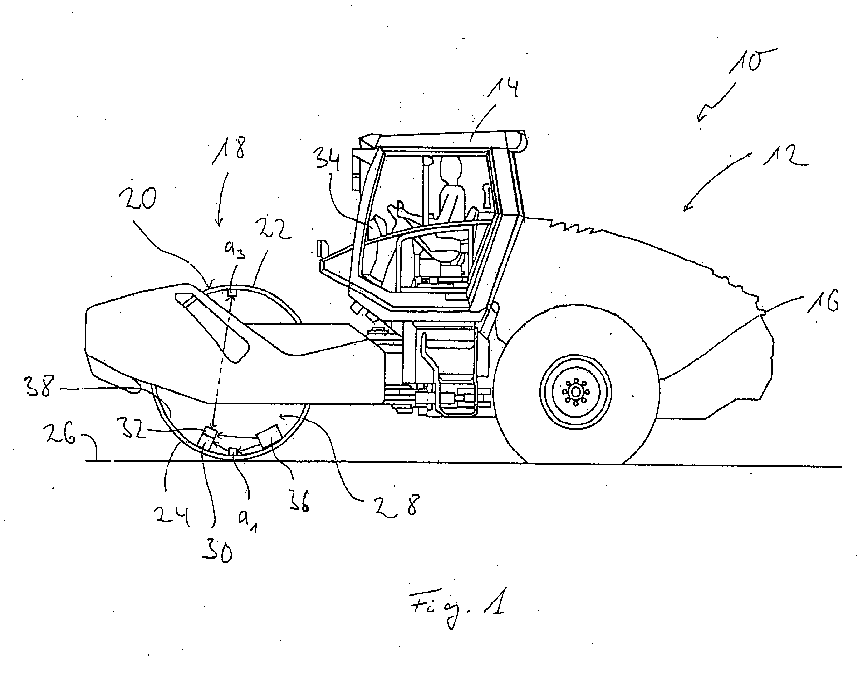

In Fig. 1 ist in Seitenansicht und vereinfacht ein zum Verdichten von Boden einzusetzender selbstfahrender Bodenverdichter 10 dargestellt. Der Bodenverdichter 10 umfasst einen hinteren Wagenbereich 12, an welchem eine Führerkabine 14 vorgesehen ist, ebenso wie zwei durch einen nicht dargestellten Antrieb zur Drehung angetriebene Antriebsräder 16. Mit dem hinteren Wagenbereich 12 ist in gelenkiger Weise ein vorderer Wagenbereich 18 verbunden, der eine Verdichterwalze 20, allgemein auch als Bandage bezeichnet, um eine Drehachse drehbar trägt. Ein Walzenmantel 22 steht mit seiner Außenumfangsfläche 24 in Kontakt mit dem zu verdichtenden Untergrund 26.

Um das Verdichtungsergebnis beeinflussen zu können, ist der Verdichterwalze 20 ein im Allgemeinen in den von dieser umschlossenen Raumbereich angeordneter Rüttelantrieb zugeordnet. Dieser Rüttelantrieb kann, je nach Ausgestaltung, die Verdichterwalze 20 in verschiedene Rüttelzustände bringen. Bei Beaufschlagung der Verdichterwalze 20 mit einer Umfangsrüttelbeaufschlagung führt diese bzw. der Walzenmantel 22 eine um die Drehachse der Verdichterwalze 20 hin und her oszillierende Oszillationsbewegung aus. Eine Radialrüttelbeschleunigung erzeugt eine Vibrationsbewegung des Walzenmantels 22 bzw. der Außenumfangsfläche 24, also eine Bewegung in radialer Richtung. Durch Auswahl der jeweils aufzubringenden Beschleunigung bzw. der Überlagerung verschiedener Beschleunigungszustände kann auch abhängig von dem zu verdichtenden Material das Verdichtungsverhalten beeinflusst werden.

Um bei dem Bodenverdichter 10 den Bewegungszustand der Verdichterwalze 20 insbesondere dort, wo diese in Kontakt mit dem Aufbaumaterial des zu verdichtenden Untergrunds 26 ist, zu ermitteln, ist der Verdichterwalze 20 eine Vorrichtung 28 zugeordnet, vermittels welcher die Bewegung der um ihre Drehachse drehbaren Verdichterwalze 20 erfasst werden kann.

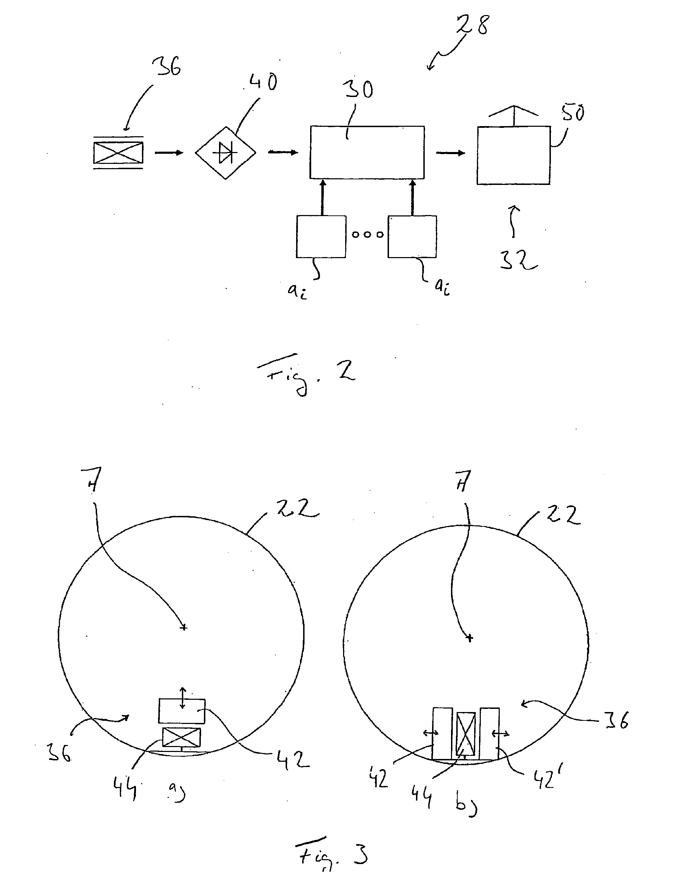

Diese in Fig. 2 in prinzipieller Art und Weise auch veranschaulichte Vorrichtung 28 umfasst eine Mehrzahl von mit dem Walzenmantel 22 um die Drehachse der Verdichterwalze 20 drehbaren Bewegungssensoren aᵢ. Vorteilhafterweise sind diese Bewegungssensoren aᵢ als Dreiachsen-Beschleunigungssensoren ausgebildet, die für drei mögliche Raumrichtungen x, y und z jeweils ein die Beschleunigung bzw. Beschleunigungskomponente in dieser Richtung repräsentierendes Signal bzw. ein durch Überlagerung dieser Beschleunigungsvektoren generiertes Gesamtbeschleunigungssignal liefern können.

Die Beschleunigungssensoren übertragen ihr Sensorsignal zu einem Mikrokontroller 30. Der Mikrokontroller 30 wiederum steht in Verbindung mit einer Funk-Signalübertragungsanordnung 32, welche beruhend auf den Sensorsignalen der Bewegungssensoren aᵢ basierende Bewegungsinformation zu einer beispielsweise im Bereich der Führerkabine angeordneten Auswerteeinheit 34 überträgt. In dieser Auswerteeinheit 34 kann eine Signal- bzw. Datenverarbeitung stattfinden und es kann der den Bodenverdichter 10 betreibenden Person beispielsweise graphisch oder nummerisch der Bewegungszustand der Verdichterwalze 20 angezeigt werden, bzw. mittels entsprechendem Algorithmus verrechnet und als Verdichtungswert angezeigt werden. Außerdem können durch Beeinflussung der Maschinenregelung unerwünschte Schwingungszustände der Verdichterwalze 20 verhindert werden.

Um die mit elektrischer Energie zu speisenden Systembereiche, also die Bewegungssensoren aᵢ, den Mikrokontroller 30 und die Funk-Signalübertragungsanordnung 32 mit der für den Betrieb derselben erforderlichen elektrischen Energie zu speisen, ist ferner eine Energiewandleranordnung 36 vorgesehen. Auch diese Energiewandleranordnung 36 ist ebenso wie der Mikrokontroller 30, die Bewegungssensoren aᵢ und die Funk-Signalübertragungsanordnung 32 an der Verdichterwalze 20, vorzugsweise der Innenseite 38 des Walzenmantels 22, angeordnet und somit mit den anderen Komponenten der Vorrichtung 28 um die Drehachse der Verdichterwalze 20 bewegbar. Der Energiewandler 36 kann aus der Bewegung der Verdichterwalze 20 elektrische Energie gewinnen. Insbesondere kann dabei ausgenutzt werden, dass durch den bereits beschriebenen Rüttelantrieb die Verdichterwalze 20 eine Oszillationsbewegung oder/und eine Vibrationsbewegung ausführt, also eine alternierend hin- und herlaufende Bewegung. Dies kann genutzt werden, um eine Schwingungsmasse der Energiewandleranordnung 36 in eine Schwingungsbewegung zu versetzen und durch elektromagnetische Wandlung oder beispielsweise auch unter Ausnutzung des piezoelektrischen Effekts elektrische Energie zu gewinnen. Bedingt durch die Schwingungsbewegung wird die Polarität der in der Energiewandleranordnung 36 generierten elektrischen Spannung sich alternierend umkehren. Es kann daher vorteilhaft sein, einen Gleichrichter 40, beispielsweise Brückengleichrichter, vorzusehen, um die elektrisch zu betreibenden Systembereiche mit einer Gleichspannung beaufschlagen zu können.

Je nachdem, in welchen Bewegungszustand die Verdichterwalze 20 grundsätzlich oder primär zu versetzen ist, kann es dabei vorteilhaft sein, die Energiewandleranordnung 36 unterschiedlich zu positionieren. So zeigt beispielsweise die Fig. 3a) eine Energiewandleranordnung 36 mit einer zur Schwingungsbewegung anregbaren Schwingungsmasse 42, die bezüglich eines mit dem Walzenmantel 22 feststehend verbundenen Körperbereichs 44 im Wesentlichen eine Radialschwingungsbewegung bezüglich der Drehachse A durchführen kann. Eine derartige Positionierung bzw. Orientierung ist dann vorteilhaft, wenn die Verdichterwalze 20 primär mit einer Radialrüttelbeschleunigung beaufschlagt wird und mithin eine Vibrationsbewegung durchführen soll.

Die Fig. 3b) zeigt eine Anordnung, bei welcher die Energiewandleranordnung 36 so positioniert ist, dass die hier paarweise vorgesehenen Schwingungsmassen 42, 42' bezüglich des Körperbereichs 44 im Wesentlichen eine Umfangsbewegung bzw. Tangentialbewegung ausführen können, was dann besonders vorteilhaft ist, wenn die Verdichterwalze 20 bzw. der Walzenmantel 22 derselben primär zur Durchführung einer Oszillationsbewegung mit einer Umfangsrüttelbeschleunigung beaufschlagt wird.

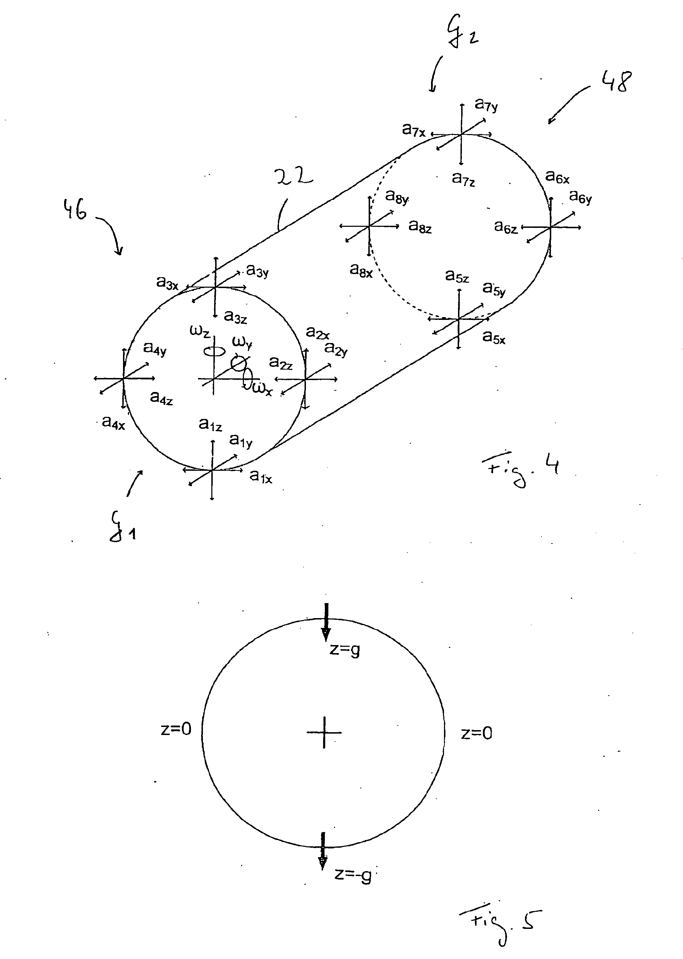

Wie die Fig. 1 und 4 dies veranschaulichen, sind die verschiedenen Bewegungssensoren aᵢ an der Innenumfangsseite 38 des Walzenmantels 22 in Umfangsrichtung um die Drehachse verteilt angeordnet. Um den Bewegungszustand der Verdichterwalze 20 insbesondere in ihrem in Kontakt mit dem zu verdichtenden Untergrund 26 unten liegenden Bereich exakt bestimmen zu können, ist es vorteilhaft, zumindest eine Gruppe mit drei derartigen Bewegungssensoren aᵢ vorzusehen, vorteilhafterweise Gruppen mit jeweils vier Bewegungssensoren aᵢ. Dies ist auch in der Fig. 4 veranschaulicht. Man erkennt dort den prinzipiell dargestellten Walzenmantel 22 und in den beiden axialen Endbereichen 46, 48 desselben jeweils eine Gruppe G₁ bzw. G₂ mit jeweils vier Dreiachsen-Beschleunigungssensoren a₁, a₂, a₃, a₄ (Gruppe G₁) bzw. a₅, a₆, a₇, a₈ (Gruppe G₂). Die in einer jeweiligen Gruppe G₁ bzw. G₂ vorgesehenen Sensoren aᵢ sind zueinander in gleichmäßigem Umfangsabstand, hier also jeweils 90°, angeordnet. Die verschiedenen Bewegungssensoren aᵢ sind dabei beispielsweise derart orientiert, dass die durch diese zu erfassende Beschleunigungskomponente x näherungsweise in Umfangsrichtung orientiert ist, die Beschleunigungskomponente y in Richtung der Drehachse der Verdichterwalze 20 orientiert ist und die Komponente z orthogonal zum Walzenmantel 22, also radial bezüglich der Drehachse der Verdichterwalze 20 orientiert ist, wobei eine Richtung auf den Walzenmantel 11 zu eine positive z-Richtung definiert.

Mit derartiger Anordnung der verschiedenen Beschleunigungssensoren aᵢ der Gruppen G₁ und G₂ wird es möglich, in jedem Umfangsendbereich 46, 48 zu ermitteln, welcher bzw. welche der Beschleunigungssensoren aᵢ unten, also in Kontakt mit dem zu verdichtenden Untergrund positioniert sind. Wie die Fig. 5 dies veranschaulicht, enthält beispielsweise die z-Komponente der Beschleunigung bedingt durch die der Rüttelbeschleunigung permanent überlagerte konstante Erdbeschleunigung g dann, wenn beispielsweise der Beschleunigungssensor a₁ unten orientiert ist, bei diesem Beschleunigungssensor a₁ einen der Rüttelbeschleunigung überlagerten konstanten Anteil von - g, während der in diesem Zustand oben, also vom Untergrund 26 maximal entfernt positionierte Beschleunigungssensor a₃ ein z-Beschleunigungskomponentensignal liefert, welchem die Erdbeschleunigung mit anderem Vorzeichen, hier also als g, überlagert ist. Bei den beiden in mittlerer Höhe positionierten Beschleunigungssensoren a₂ und a₄ liefert die z-Komponente keinen durch Überlagerung der Erdbeschleunigung sich ergebenden konstanten Anteil. Durch Ermittlung der in den verschiedenen Sensorsignalen, insbesondere der z-Komponente enthaltenen konstanten Anteile kann also die Positionierung der jeweiligen Sensoren aᵢ der verschiedenen Gruppen G₁ bzw. G₂ in Umfangsrichtung bzw. bezüglich des Untergrunds exakt ermittelt werden. Ist keiner der Sensoren in unmittelbarem Kontakt mit dem Untergrund 26, also keiner der Sensoren im unteren Bereich angeordnet, so wird bei jedem der einer Gruppe G₁, G₂ zuzuordnenden Beschleunigungssensoren aᵢ die z-Beschleunigungskomponente einen von Null verschiedenen konstanten Anteil enthalten. Durch Berücksichtigung der von allen Sensoren dann gelieferten Signale wird es in einfacher Weise durch entsprechende Winkelbeziehung möglich, auf die Drehpositionierung der Verdichterwalze 20 zu schließen. Beispielsweise kann dann, wenn keiner der Sensoren unmittelbar im unteren Bereich positioniert ist, durch gemeinsame Berücksichtigung der beiden am weitesten unten positionierten Sensoren auf den Bewegungszustand in dem mit dem Untergrund 26 in Kontakt stehenden Bereich geschlossen werden. Auch könnte lediglich das Signal desjenigen Sensors ausgewertet werden, welcher dem Untergrund 26 nächstliegend positioniert ist.

Bei der vorangehend erläuterten Art und Weise zur Ermittlung, welcher der Beschleunigungssensoren aᵢ einer jeweiligen Gruppe G₁ bzw. G₂ dazu verwendet werden soll, den Bewegungszustand an der Unterseite zu identifizieren, könnte zu genaueren Winkellageauflösung auch noch das die x-Beschleunigungskomponente repräsentierende Signal berücksichtigt werden. Dieses ist hinsichtlich der Überlagerung der Erdbeschleunigung zu dem in Fig. 5 repräsentieren z-Komponentensignal um 90° phasenverschoben. Bei Berücksichtigung sowohl der x-Beschleunigungskomponente, als auch der z-Beschleunigungskomponente kann somit eine genauere Winkelauflösung bei der Positionsbestimmung der Beschleunigungssensoren aᵢ einer jeweiligen Gruppe in Umfangsrichtung und somit auch in Bezug auf den Untergrund 26 erreicht werden.

Die Vorrichtung 28 kann, wie dies bereits vorangehend mit Bezug auf die Fig. 3 und die Energiewandleranordnung 36 erläutert wurde, in verschiedenster Weise gestaltet werden. So kann beispielsweise vorgesehen sein, dass in Zuordnung zu allen Sensoren aᵢ ein einziger Mikrokontroller 30 und mit diesem zusammenwirkend eine Funk-Signalübertragungsanordnung 32 mit einer einzigen Übertragungseinheit 50 vorgesehen sind. All diese Systembereiche können beispielsweise von einer einzigen Energiewandleranordnung 36 mit Energie gespeist werden. Das Zuführen der Sensorsignale aller Sensoren aᵢ zu einem einzigen Mikrokontroller 30 bringt die Möglichkeit mit sich, die Signalverarbeitung, insbesondere auch die Verknüpfung verschiedener Sensorsignale, bereits in diesem Mikrokontroller 30 vorzunehmen und dann zur Auswerteeinheit 34 beispielsweise zur Anzeige des Verarbeitungsergebnisses zu übertragen. Selbstverständlich könnte der Mikrokontroller 30 auch lediglich dazu genutzt werden, die Signale der verschiedenen Sensoren aᵢ in zeitlicher Abfolge zur weiteren Signalverarbeitung zur Auswerteeinheit 34 zu übertragen, was bedeuetet, dass im Mikrocontroller 30 selbst im Wesentlichen keine Signalverarbeitung vorgenommen wird.

Bei einer alternativen Ausgestaltung könnte, je nach Energiebedarf, eine größere Anzahl an Energiewandleranordnungen 36 vorgesehen sein. Beispielsweise könnte in Zuordnung zu jeder der beiden Gruppen G₁ und G₂ jeweils eine Energiewandleranordnung 36 vorgesehen sein. Bei entsprechendem Energiebedarf könnte auch in Zuordnung zu jedem Sensor aᵢ eine Energiewandleranordnung 36 vorgesehen sein.

Des Weiteren ist es möglich, die Anzahl der Übertragungseinheiten 50 der Funk-Signalübertragungsanordnung 32 zu variieren. Auch hier könnte beispielsweise in Zuordnung zu jeder Gruppe G₁ bzw. G₂ eine Übertragungseinheit 50 vorgesehen sein. Bei entsprechender baulicher Verknüpfung könnte auch für jeden Sensor aᵢ eine eigenständig arbeitende Übertragungseinheit 50 vorgesehen sein, so dass beispielsweise auch Baueinheiten geschaffen werden können, in welchen ein Bewegungssensor aᵢ, ein Mikrokontroller 30, eine Übertragungseinheit 50 und diesen zugeordnet eine Energiewandleranordnung 36 ggf. mit Gleichrichter 40 zusammengefasst sind.

Auch die Speisung mit elektrischer Energie aus der Energiewandleranordnung 36 kann, wie die Fig. 1 dies veranschaulicht, in verschiedener Weise erfolgen. Wie im Zusammenhang mit dem in Fig. 1 unten positionierten Sensor a₁ gezeigt, ist es möglich, den bzw. die Sensoren aᵢ und die Funk-Signalübertragungsanordnung 32 bzw. auch den Mikrokontroller 30 voneinander unabhängig mit elektrischer Energie zu speisen. Wie im Verhältnis zum oben positionierten Sensor a₃ gezeigt, kann alternativ die zwischen diesem und insbesondere auch dem Mikrokontroller 30 bestehende Verbindung sowohl zur Übertragung des Sensorsignals, als auch zur Speisung mit elektrischer Energie, also bidirektional, genutzt werden.

Weiterhin kann die Funk-Signalübertragungsanordnung 32 bzw. zumindest eine Übertragungseinheit 50 derselben nicht nur zum Senden von Signalen zur Auswerteeinheit 34 genutzt werden, sondern auch zum Empfang von Signalen. Beispielsweise wird es somit möglich, das im Mikrokontroller 30 vorhandene Arbeitsprogramm zu aktualisieren oder ggf. eine Parametrisierung der verschiedenen Sensoren aᵢ, also beispielsweise eine Nullwertermittlung, eine Normierung oder dergleichen, vorzunehmen. Die zwischen dem Mikrokontroller 30 und der Auswerteeinheit 34 zu übertragenden Signale bzw. Informationen können in analoger oder aber auch in digitaler Form vorliegen. Insbesondere eine digitale Codierung ermöglicht in einfacher Art und Weise eine signaltechnische Differenzierung der in dem Funksignal enthaltenen Informationen in Zuordnung zu den verschiedenen Sensoren aᵢ.

Um für den Bewegungszustand bzw. die Positionierung der Verdichterwalze 20 noch weitergehende Informationen zu erlangen, ist es ferner möglich, einen oder mehrere Winkelsensoren ω, auch Gyro-Elemente bezeichnet, vorzusehen. Vermittels eines derartigen Sensors, welcher beispielsweise drehachsennah positioniert ist, ist es insbesondere auch möglich, Information über die Lage der Drehachse im Raum bzw. die Drehgeschwindigkeit zu erhalten. Auch ein oder mehrere derartige Winkelsensoren können in der vorangehend beschriebenen Art und Weise analog zu den Beschleunigungssensoren mit elektrischer Energie gespeist werden bzw. über den Mikrokontroller 30 und die Funk-Signalübertragungsanordnung 32 ihr Erfassungsergebnis oder darauf beruhende Information zur Auswerteeinheit 34 übertragen.

Weiter ist darauf hinzuweisen, dass die verschiedenen Systembereiche der Vorrichtung 28 an verschiedenen Bereichen an der Innenseite des Walzenmantels angeordnet werden können. Für die Beschleunigungssensoren bietet sich die Anbringung unmittelbar an der Innenumfangsfläche des Walzenmantels an, um hier bestmöglich dessen Bewegungszustand erfassen zu können. Auch die Energiewandleranordnung kann vorteilhafterweise an der Innenumfangsfläche des Walzenmantels vorgesehen sein, um dessen kinetische Energie möglichst effizient nutzen zu können. Die Funk-Signalübertragungsanordnung kann, sofern beispielsweise auch baulich getrennt von der Energiewandlungsanordnung ausgebildet, an einem anderen Bereich, beispielsweise einem drehachsennahen Bereich oder einem Nabenscheibenbereich oder dergleichen der Verdichterwalze, vorgesehen sein. Auch die Energiewandleranordnung oder/und die Sensoren oder zumindest ein Teil derselben könnten beispielsweise am radial äußeren Bereich eines den Walzenmantel tragenden, beispielsweise scheibenartig ausgebildeten Nabenbereichs positioniert sein.

Der substantielle Vorteil der erfindungsgemäßen Ausgestaltung eines Bodenverdichters bzw. einer Vorrichtung zur Erfassung der Bewegung einer Verdichterwalze eines Bodenverdichters wird bereits dadurch erlangt, dass die hierzu eingesetzten Sensoren und ggf. auch der Mikrokontroller an der Verdichterwalze vorgesehen sind und sich mit dieser bewegen. Dieser Vorteil wird unabhängig davon erlangt, ob auch eine Funk-Signalübertragungsanordnung oder/und eine Energiewandleranordnung ggf. auch ein Mikrokontroller oder dergleichen zum Vermeiden der konstruktiv allgemein aufwendigeren Drehdurchführungen sich mit der Verdichterwalze bewegen. Grundsätzlich könnte jedoch auch eine Funk-Signalübertragungsanordnung an einem nicht mit der Verdichterwalze rotierenden Bereich eines Bodenverdichters vorgesehen sein und über eine Drehdurchführung dann mit den verschiedenen Sensoren oder einem oder mehreren dieser zugeordneten Sensoren verbunden sein. Auch eine Energiequelle, beispielsweise eine wiederaufladbare Batterie, könnte an einem nicht mit der Verdichterwalze rotierenden Bereich vorgesehen sein und mit einem oder mehreren der Sensoren oder ggf. einer mitrotierenden Funk-Signalübertragungsanordnung durch Kabelverbindung vermittels einer Drehdurchführung verbunden sein. Selbstverständlich könnte eine derartige beispielsweise wiederaufladbare Energiequelle mit der Verdichterwalze sich bewegend vorgesehen sein, wobei dann dafür zu sorgen ist, dass eine Anschlussverbindung zum Wiederaufladen sichergestellt werden kann. Sofern keine mit der Verdichterwalze rotierende Funk-Signalübertragungsanordnung vorgesehen ist und insofern die Signale von den Sensoren oder dem Mikrokontroller über Leitungsverbindung in den nicht rotierenden Bereich zu übertragen sind, könnte auf eine Funk-Signalübertragung grundsätzlich verzichtet werden und die Signalübertragung ausschließlich durch Leitungsverbindung erfolgen.

## Patentansprüche

1. Vorrichtung zur Erfassung der Bewegung einer um eine Drehachse (A) drehbaren Verdichterwalze (20) eines Bodenverdichters (10), **dadurch gekennzeichnet, daß** sie an einer Innenseite eines Walzenmantels (22) eine Mehrzahl von in Umfangsrichtung um die Drehachse (A) mit Umfangsabstand zueinander angeordneten, mit dem Walzenmantel (22) um die Drehachse (A) bewegbaren Bewegungssensoren (aᵢ) umfasst.

2. Vorrichtung nach Anspruch 1,
**gekennzeichnet durch**
- eine Funk-Signalübertragungsanordnung (32) zur Übertragung von auf Sensorsignalen der Bewegungssensoren (aᵢ) beruhender Bewegungsinformation zu einer Auswerteeinheit (34), oder/und
- eine Energiewandleranordnung (36) zur Gewinnung elektrischer Energie aus der Verdichterwalzenbewegung zur Versorgung der Bewegungssensoren (aᵢ) und der Funk-Signalübertragungsanordnung (32).

3. Vorrichtung nach Anspruch 1 oder 2,
**dadurch gekennzeichnet, dass** wenigstens eine Gruppe (G₁, G₂) mit wenigstens drei, vorzugsweise wenigstens vier, mit Umfangsabstand zueinander angeordneten Bewegungssensoren (aᵢ) vorgesehen ist.

4. Vorrichtung nach Anspruch 3,
**dadurch gekennzeichnet, dass** die Bewegungssensoren (aᵢ) einer Gruppe (G₁, G₂) im Wesentlichen im gleichen axialen Bereich angeordnet sind.

5. Vorrichtung nach Anspruch 3 oder 4,
**dadurch gekennzeichnet, dass** in wenigstens einem, vorzugsweise beiden axialen Endbereichen (46,48) des Walzenmantels (22) eine Gruppe (G₁, G₂) von Bewegungssensoren (aᵢ) angeordnet ist.

6. Vorrichtung nach einem der Ansprüche 3 bis 5,
**dadurch gekennzeichnet, dass** die Bewegungssensoren (aᵢ) einer Gruppe (G₁, G₂) zueinander in gleichmäßigem Umfangsabstand angeordnet sind.

7. Vorrichtung nach einem der Ansprüche 1 bis 6,
**dadurch gekennzeichnet, dass** wenigstens ein Teil der Bewegungssensoren (aᵢ) als Beschleunigungssensoren (aᵢ), vorzugsweise Dreiachsen-Beschleunigungssensoren (aᵢ), ausgebildet ist.

8. Vorrichtung nach einem der Ansprüche 2 bis 7,
**dadurch gekennzeichnet, dass** die Funk-Signalübertragungsanordnung (32) in Zuordnung zu jedem Bewegungssensor (aᵢ) eine Signalübertragungseinheit (50) umfasst.

9. Vorrichtung nach einem der Ansprüche 2 bis 8,
**dadurch gekennzeichnet, dass** die Funk-Signalübertragungsanordnung (32) für wenigstens zwei Bewegungssensoren (aᵢ), vorzugsweise alle Bewegungssensoren einer Gruppe (G₁, G₂) von Bewegungssensoren (aᵢ), am meisten bevorzugt alle Bewegungssensoren (aᵢ), eine gemeinsame Signalübertragungseinheit (50) umfasst.

10. Vorrichtung nach einem der Ansprüche 2 bis 9,
**dadurch gekennzeichnet, dass** die Energiewandleranordnung (36) in Zuordnung zu jedem Bewegungssensor (aᵢ) oder/und zu der Funk-Signalübertragungsanordnung (32) eine Energiewandlereinheit umfasst.

11. Vorrichtung nach einem der Ansprüche 2 bis 10,
**dadurch gekennzeichnet, dass** die Energiewandleranordnung in Zuordnung zu wenigstens zwei Bewegungssensoren (aᵢ) oder/und wenigstens zwei Signalübertragungseinheiten (50) der Funk-Signalübertragungsanordnung (32), vorzugsweise allen Bewegungssensoren (aᵢ) einer Gruppe (G₁, G₂) von Bewegungssensoren (aᵢ) oder/und den diesen zugeordneten Signalübertragungseinheiten (50), am meisten bevorzugt allen Bewegungssensoren (aᵢ) oder/und Signalübertragungseinheiten (50), eine gemeinsame Energiewandlereinheit (50) umfasst.

12. Bodenverdichter, umfassend wenigstens eine Verdichterwalze (20) und in Zuordnung zu wenigstens einer Verdichterwalze (20) eine Vorrichtung (28) nach einem der vorangehenden Ansprüche.

13. Bodenverdichter nach Anspruch 12,
**dadurch gekennzeichnet, dass** der wenigstens einen Verdichterwalze (20) ein Rüttelantrieb zur Erzeugung einer Umfangsrüttelbeschleunigung oder/und zur Erzeugung einer Radialrüttelbeschleunigung zugeordnet ist.

## Claims

1. Device for detecting the movement of a compactor roller (20) of a soil compactor (10) which can be rotated about an axis of rotation (A), **characterized in that** it comprises a plurality of motion sensors (aᵢ) arranged at an inner side of a roller shell (22) in a circumferentially spaced way in a circumferential direction about the axis of rotation (A) which can be moved about the axis of rotation (A) with the roller shell (22).

2. Device according to claim 1,
**characterized by**
- a radio signal transmission arrangement (32) for the transmission of a motion information based on sensor signals of the motion sensors (aᵢ) to an evaluation unit (34) or/and
- an energy converter arrangement (36) for obtaining electric energy from the movement of the compactor roller for the supply of energy to the motion sensors (aᵢ) and the radio signal transmission arrangement (32).

3. Device according to claim 1 or 2,
**characterized by** at least one group (G₁, G₂) being provided with at least three, preferably at least four motion sensors (aᵢ) which are circumferentially spaced.

4. Device according to claim 3,
**characterized by** the motion sensors (aᵢ) of one group (G₁, G₂) being arranged in substantially the same axial region.

5. Device according to claim 3 or 4,
**characterized by** a group (G₁, G₂) of motion sensors (aᵢ) being arranged in at least one, preferably both axial end sections (46, 48) of the roller shell (22).

6. Device according to one of claims 1 to 6,
**characterized by** the motion sensors (aᵢ) of one group (G₁, G₂) being arranged with regular circumferential spacing in relation to each other.

7. Device according to one of claims 3 to 5,
**characterized by** at least part of the motion sensors (aᵢ) being adapted as acceleration sensors (aᵢ), preferably triaxial acceleration sensors (aᵢ).

8. Device according to one of claims 2 to 7,
**characterized by** the radio signal transmission arrangement (32) comprising a radio signal transmission unit (50) in association to each motion sensor (aᵢ).

9. Device according to one of claims 2 to 8,
**characterized by** the radio signal transmission arrangement (32) comprising a common radio signal transmission unit (50) for at least two motion sensors (aᵢ), preferably all motion sensors (aᵢ) of a group (G₁, G₂), and mostly preferred for all motion sensors (aᵢ).

10. Device according to one of claims 2 to 9,
**characterized by** the energy converter arrangement (36) comprising an energy converter unit in association to each motion sensor (aᵢ) or/and to the radio signal transmission arrangement (32).

11. Device according to one of claims 2 to 10,
**characterized by** the energy converter arrangement comprising a common radio signal transmission unit (50) in association to at least two motion sensors (aᵢ) or/and at least two radio signal transmission units (50) of the radio signal transmission arrangement (32), preferably all motion sensors (aᵢ) of a group (G₁, G₂) of motion sensors (aᵢ) or/and the associated radio signal transmission units (50), most preferably all motion sensors (aᵢ) or/and radio signal transmission units (50).

12. Soil compactor, comprising at least one compactor roller (20) and in association to at least one compactor roller (20) a device (28) according to one of the preceding claims.

13. Soil compactor according to claim 12,
**characterized by** a vibration drive for producing a circumferential vibration acceleration or/and for producing a radial vibration acceleration being associated to the at least one compactor roller (20).

## Revendications

1. Dispositif permettant de détecter le mouvement d'un rouleau (20) d'un compacteur de sol (10) qui peut pivoter autour d'un axe de rotation (A) **caractérisé en ce qu'**il comprend, à une face intérieure d'une enveloppe de rouleau (22), une pluralité de capteurs de mouvement (aᵢ) arrangés à distance périphérique dans une direction périphérique et mobile avec l'enveloppe de rouleau (22) autour de l'axe de rotation (A).

2. Dispositif selon la revendication 1,
**caractérisé par**
- un arrangement de transmission de signal radio (32) pour transmettre une information de mouvement basée sur les signaux de capteurs des capteurs de mouvement (aᵢ) vers une unité d'évaluation (34), ou/et
- un arrangement de convertisseur d'énergie (36) pour produire de l'énergie électrique du mouvement du rouleau du compacteur pour alimenter les capteurs de mouvement (aᵢ) et l'arrangement de transmission de signal radio (32).

3. Dispositif selon les revendications 1 ou 2,
**caractérisé par** au moins un groupe (G₁, G₂) étant prévu avec au moins trois, de préférence quatre capteurs de mouvement (aᵢ), arrangés à distance périphérique les uns des autres.

4. Dispositif selon la revendication 3,
**caractérisé par** les capteurs de mouvement (aᵢ) d'un groupe (G₁, G₂) étant arrangés essentiellement dans la même région axiale.

5. Dispositif selon les revendications 3 ou 4,
**caractérisé par** un groupe (G₁, G₂) de capteurs de mouvement (aᵢ) étant arrangé dans au moins une, de préférence les deux régions d'extrémité (46, 48) de l'enveloppe de rouleau (22).

6. Dispositif selon une des revendications 3 à 5,
**caractérisé par** les capteurs de mouvement (aᵢ) d'un groupe (G₁, G₂) étant arrangés à une distance périphérique uniforme.

7. Dispositif selon une des revendications 1 à 6,
**caractérisé par** au moins une partie des capteurs de mouvement (aᵢ) étant adaptés sous forme de capteurs d'accélération (aᵢ), de préférence sous forme de capteurs d'accélération (aᵢ) à trois axes.

8. Dispositif selon une des revendications 2 à 7,
**caractérisé par** l'arrangement de transmission de signal radio (32) comprenant une unité de transmission de signal (50) en association avec chaque capteur de mouvement (aᵢ).

9. Dispositif selon une des revendications 2 à 8,
**caractérisé par** l'arrangement de transmission de signal radio (32) comprenant une unité de transmission de signal (50) commune pour au moins deux capteurs de mouvement (aᵢ), de préférence pour tous les capteurs de mouvement d'un groupe (G₁, G₂) de capteurs de mouvement (aᵢ), et encore plus préférablement pour tous les capteurs de mouvement (aᵢ).

10. Dispositif selon une des revendications 2 à 9,
**caractérisé par** l'arrangement de convertissement d'énergie (36) comprenant une unité de convertisseur d'énergie en association avec chaque capteur de mouvement (aᵢ) ou/et avec l'arrangement de transmission de signal radio (32).

11. Dispositif selon une des revendications 2 à 10,
**caractérisé par** l'arrangement de convertisseurs d'énergie comprenant une unité de convertissement d'énergie (50) commune en association avec au moins deux capteurs de mouvement (aᵢ) ou/et avec au moins deux unités de transmission de signal (50) de l'arrangement de transmission de signal radio (32), de préférence avec tous les capteurs de mouvement (aᵢ) d'un groupe (G₁, G₂) de capteurs de mouvement (aᵢ) ou/et les unités de transmission de signal (50) associées, et encore plus préférablement avec tous les capteurs de mouvement (aᵢ) ou/et unités de transmission de signal (50).

12. Compacteur de sol, comprenant au moins un rouleau compacteur (20) et en association avec au moins un rouleau compacteur (20) un arrangement (28) selon une des revendications précédentes.

13. Compacteur de sol selon la revendication 12,
**caractérisé par** un mécanisme vibrant pour produire une accélération vibrante périphérique ou/et pour produire une accélération vibrante radiale étant associé audit au moins un rouleau compacteur (20).
